# EUROPEAN PATENT APPLICATION

(11) **EP 3 599 527 A1**
(43) Date of publication of application: **29.01.2020**
(21) Application number: 18185711.1
(22) Date of filing: 26.07.2018
(51) Int. Cl.: G05B 23/02

(54) **MAINTENANCE MANAGEMENT SYSTEM FOR ASSISTING OPERATOR TO RECTIFY FAULTS IN A PLANT**

(71) Applicant: Siemens Aktiengesellschaft, 80333 München (DE)
(72) Inventor: GUPTA, Rohit Kumar, 324009 Kota (IN)
(74) Representative: Isarpatent

(57) **Abstract**

The present invention related to a maintenance management system for assisting an operator to rectify a fault in an automation system (126) in a plant (100). The maintenance management system comprises a server (102) and handheld devices (124) coupled to the server (102). The server (102) is configured for providing an engineering data table of an automation system (126), and predicting an abnormal condition associated with equipment (106, 112) in the automation system (126) based on the engineering data table and a real-time plant engineering data. The server (102) is configured for determining a corrective action for the predicted abnormal condition associated with the equipment (106,112) in the automation system (126). The corrective action rectifies the predicted abnormal condition associated with the equipment (106, 112). The server (102) is also configured for outputting the determined corrective action and the predicted abnormal condition associated with the equipment (106, 112) on a user interface.

## Description

The present invention relates to a field of a maintenance management system, and more particularly relates to assisting operator to rectify faults in a plant environment.

A typical Distributed Control System (DCS) comprises a network of distributed modules all linked to an operator's terminal. Each module is designed to fulfill a specific process control function and need. Field sensors are wired to a data acquisition system, and the process information is transferred to one or more users (operators) performing specific operating or supervisory functions. The operation of the DCS is coordinated by a database and a network supervisor, while the process is controlled by an operator through a console. The DCS automatically identifies all the standard loops, (custom loops such as cascade loops, multiple-input/multiple-output loops, etc. may be manually identified), continuously monitors all loops and recursively calculates the standard deviation of the process variable, average error from setpoint, alarm frequency, correlation coefficients, power spectra, etc; provides short lists of the loops often in manual mode, often in alarm, loops with a persistent setpoint error, etc.; and ranks loops according to their usage in automatic mode, variance, etc.

Generally, in automatic mode, the DCS controls the loop automatically based on feedback algorithm pre-defined in the DCS. During plant operation, it is very likely that loop has to be manually controlled by the operator because of an occurrence of a fault. The fault may be because of certain malfunctioning of an equipment, or because a process parameter shoots up and so on. In such scenarios, the operators need to take quick decision and corrective action on the fault occurred which otherwise may lead to plant shut down. The corrective action may include such as correcting PID values, adjusting control valve opening, opening few interlocks, running a motor and so on. The next action is decided based on information gathered by loop process data. This corrective action is taken based on the knowledge of the operator. Alternatively, if in case the operators are not sure of the actions to be taken during the occurrence of the fault, the situation leads to production loss or threat to human life. Moreover, during such occurrence of the fault, an operator may not always be available to act on the alarms generated. Therefore, conventional systems always rely on a well experienced, skilled operator having complete knowledge of the plant operation and control loops to take immediate decisions and perform appropriate actions to effectively control the closed loop systems and rectify the faults occurred.

Thus, the used methods of controlling the plant environment and rectifying the faults have the drawback of been mistake prone being dependant on end-user decisions.

In light of the above, there exists a need for a method and system which is configured for assisting operators to rectify faults in automation system of the plant.

Therefore, it is an object of the present invention to provide a method and system which is configured for assisting operators to rectify faults in the automation system of the plant.

The object of the present invention is achieved by a method of assisting operators to rectify a fault in an automation system in a plant environment. The method comprises providing an engineering data table of an automation system. The engineering data table is generated using a wiring diagram associated with the automation system, an interlock table associated with the automation system and an equipment characteristics table associated with the automation system. The engineering data table comprises physical wiring interconnections between the equipments in the automation system, connection paths connecting automation devices via junction points, the interlock table associated with the automation system, unique addresses associated with the connection paths, unique identifiers associated with the automation devices and the junction points, and the equipment characteristic table associated with each equipment in the automation system. The wiring diagram comprises start and end points of a closed loop and interconnectivity between each equipments in the automation system. The interlock table associated with the automation system comprises process interlock information and safety interlock information. The equipment characteristic table comprises equipment type information, equipment limit information, operating conditions, material used, vendor details, and equipment serial number.

The method comprises predicting an abnormal condition associated with equipment in the automation system based on the engineering data table and a real-time plant engineering data. For example, the equipment may include controller, field devices such as pressure transmitters, etc. The abnormal condition comprises one or more alarms, warning condition of the equipment, danger condition of the equipment, and one or more fault conditions of the equipment. The real-time plant engineering data is received from the plant via a communication network. The real-time plant engineering data comprises interlock information of the plant environment and a current equipment characteristic of each equipment in the automation system.

The method comprises determining a corrective action for the predicted abnormal condition associated with the equipment in the automation system. The corrective action rectifies the predicted abnormal condition associated with the equipment and thereby avoids the occurrence of the fault. The corrective action comprises one or more operations such as closing or opening of control valves, tune the PID values (for example, increase or decrease P/D/I factor, raw material inflow down/up, output or production rate down or up, changes in process rules and the like. The method comprises outputting the determined corrective action and the predicted abnormal condition associated with the equipment on a user interface. In an embodiment, the determined corrective action and the predicted abnormal condition may be displayed on the user interface.

In a preferred embodiment, in predicting the abnormal condition associated with the equipment in the automation system based on the engineering data table and the real-time plant engineering data, the method comprises predicting the abnormal condition associated with the equipment in the automation system based on an amount of time required by the equipment characteristic of the equipment to reach a maximum threshold point associated with the equipment. In an aspect of the preferred embodiment, in predicting the abnormal condition associated with the equipment in the automation system based on an amount of time required by the equipment characteristic of the equipment to reach a maximum threshold point associated with the equipment, the method comprises receiving the real-time plant engineering data from the plant environment. The real-time plant engineering data comprises interlock information of the plant environment and a current equipment characteristic of each equipment in the automation system. The method comprises identifying a maximum threshold point associated with each characteristic of the equipment in the automation system from the engineering data table. The maximum threshold point associated with each characteristics of the equipment is defined in the equipment characteristics table. The maximum threshold point indicates the maximum value which is the maximum process value (pressure/ temperature/ flow and the like) until which an equipment can work normally or behaves normally with respect to an action taken as per process rules of the plant. The method comprises comparing the maximum threshold point associated with each characteristic of the equipment in the automation system with the current equipment characteristic in the received real-time plant engineering data. In an exemplary embodiment, the maximum threshold point associated with temperature value of the equipment is compared with the current temperature value of the equipment. In this case, the temperature value is one example characteristic of the equipment. The method comprises computing an amount of time required by the equipment characteristic to reach the maximum threshold point based on the comparison. Also, the method comprises predicting the abnormal condition associated with the equipment in the automation system based on the computed amount of time required by the equipment characteristic to reach the maximum threshold point.

In a preferred embodiment, in determining the corrective action for the predicted abnormal condition associated with the equipment in the automation system, the method comprises determining the corrective action for the predicted condition associated with the equipment in the automation system based on a historical data stored in a database.

In another preferred embodiment, in determining the corrective action for the predicted abnormal condition associated with the equipment in the automation system, the method comprises temporarily creating a simulation environment corresponding to the real-time plant engineering data associated with the plant environment. The simulation environment, for example, is a virtual environment replicating the process philosophy of the actual plant environment. Technologies such as digital twin can be utilized to create the simulation environment and exact equipment digital replica can be created which can give response and analysis of the action taken on the equipment as if it is used at real-time in plant environment. Further, the method comprises simulating the predicted abnormal condition associated with the equipment in the simulation environment to identify the corrective action. Also, the method comprises outputting the corrective action for the predicted abnormal condition associated with the equipment. A positive simulation result is yielded by the corrective action.

In an aspect of the preferred embodiment, the method comprises determining a first alternate corrective action for the predicted abnormal condition associated with the equipment if the simulation result is negative. The first alternate corrective action is determined based on engineering data rules. For example, the engineering data rules may be P&ID rules.

In another aspect of the preferred embodiment, the method comprises determining a second alternate corrective action for the predicted abnormal condition associated with the equipment based on dependency of each closed loop in the plant environment. The dependency of each closed loop in the plant environment is obtained from the engineering data table.

The method comprises determining faulty equipment in the automation system based on the predicted abnormal condition and the engineering data table. In an embodiment, the predicted abnormal condition indicates the state of the equipment along with the equipment characteristics. Also, the predicted abnormal condition indicates the next values of the equipment characteristics with respect to time. Further, the engineering data table comprises equipment characteristic tables indicating the range of limits of the equipment. Based on the state of the equipment, the next values of the equipment characteristics, and the engineering data table, the faulty equipment is determined. The method further comprises determining a location of the faulty equipment in the automation system. The location of the faulty equipment is indicative of a physical location of the faulty equipment in the automation system. Additionally, the method comprises outputting the location of the faulty equipment on the user interface. In an embodiment, the location of the faulty equipment is superimposed on the wiring diagram of the automation system.

The method comprises automatically executing the determined corrective actions in the automation system after a predefined time interval. In an embodiment, the predefined time interval may be defined by the user. In a preferred embodiment, upon outputting the determined corrective actions, a timer for the predefined time interval is started to wait for an operator or a field engineer to act on the outputted corrective actions. If the operator or the field engineer fails to act on the corrective actions within the predefined time interval, then the corrective actions are automatically executed in the automation system.

The object of the present invention is also achieved by an apparatus comprising a processor, and a memory coupled to the processor. The apparatus may include a server located in a plant, a server remotely located from the plant, a cloud infrastructure such as public cloud or private cloud, and the like. Alternatively, the apparatus may include a controller, human-machine interface device, field devices, etc. The memory comprises a maintenance management module stored in the form of machine-readable instructions and executable by the processor.

The maintenance management module is configured for providing an engineering data table of an automation system. The maintenance management module is configured for generating the engineering data table by merging wiring diagrams from engineering time and commissioning time with interlock tables and equipment characteristics table. The maintenance management module is configured for updating the engineering data table based on changes to the plant environment. During the operation of the plant, the maintenance management module is configured for predicting an abnormal condition associated with equipment in the automation system based on the engineering data table and a real-time plant engineering data. The abnormal condition comprises one or more alarms, warning condition of the equipment, danger condition of the equipment, and one or more fault conditions of the equipment.

The maintenance management module is configured for determining a corrective action for the predicted abnormal condition associated with the equipment in the automation system. The corrective action rectifies the predicted abnormal condition associated with the equipment. The maintenance management module is configured for outputting the determined corrective action and the predicted abnormal condition associated with the equipment on a user interface.

In a preferred embodiment, in predicting the abnormal condition associated with the equipment in the automation system based on the engineering data table and the real-time plant engineering data, the maintenance management module is configured for predicting the abnormal condition associated with the equipment in the automation system based on an amount of time required by the equipment characteristic of the equipment to reach a maximum threshold point associated with the equipment. In as aspect of the preferred embodiment, the method comprises receiving the real-time plant engineering data from the plant environment. The real-time plant engineering data comprises interlock information of the plant environment and a current equipment characteristic of each equipment in the automation system. The maintenance management module is configured for identifying a maximum threshold point associated with each characteristic of the equipment in the automation system from the engineering data table. Further, the maintenance management module is configured for comparing the maximum threshold point associated with each characteristic of the equipment in the automation system with the current equipment characteristic in the received real-time plant engineering data. Also, the maintenance management module is configured for computing an amount of time required by the equipment characteristic to reach the maximum threshold point based on the comparison. Also, the maintenance management module is configured for predicting the abnormal condition associated with the equipment in the automation system based on the computed amount of time required by the equipment characteristic to reach the maximum threshold point.

In a preferred embodiment, in determining the corrective action for the predicted abnormal condition associated with the equipment in the automation system, the maintenance management module is configured for determining the corrective action for the predicted condition associated with the equipment in the automation system based on a historical data stored in a database.

In another preferred embodiment, in determining the corrective action for the predicted abnormal condition associated with the equipment in the automation system, the maintenance management module is configured for temporarily creating a simulation environment corresponding to the real-time plant engineering data associated with the plant environment. The simulation environment, for example, is a virtual environment replicating the process philosophy of the actual plant environment. Technologies such as digital twin can be utilized to create the simulation environment and exact equipment digital replica can be created which can give response and analysis of the action taken on the equipment as if it is used at real-time in plant environment. Further, the maintenance management module is configured for simulating the predicted abnormal condition associated with the equipment in the simulation environment to identify the corrective action. Also, the maintenance management module is configured for outputting the corrective action for the predicted abnormal condition associated with the equipment. A positive simulation result is yielded by the corrective action.

In an aspect of the preferred embodiment, the maintenance management module is configured for determining a first alternate corrective action for the predicted abnormal condition associated with the equipment if the simulation result is negative. The first alternate corrective action is determined based on engineering data rules.

In another aspect of the preferred embodiment, the maintenance management module is further configured for determining a second alternate corrective action for the predicted abnormal condition associated with the equipment based on dependency of each closed loop in the plant environment. The dependency of each closed loop in the plant environment is obtained from the engineering data table.

In an embodiment, the maintenance management module is configured for determining a faulty equipment in the automation system based on the predicted abnormal condition and the engineering data table. In an embodiment, the predicted abnormal condition indicates the state of the equipment along with the equipment characteristics. Also, the predicted abnormal condition indicates the next values of the equipment characteristics with respect to time. Further, the engineering data table comprises equipment characteristic tables indicating the range of limits of the equipment. Based on the state of the equipment, the next values of the equipment characteristics, and the engineering data table, the faulty equipment is determined. The maintenance management module is configured for determining a location of the faulty equipment in the automation system. The location of the faulty equipment is indicative of a physical location of the faulty equipment in the automation system. Additionally, the maintenance management module is configured for outputting the location of the faulty equipment on the user interface. In an embodiment, the location of the faulty equipment is superimposed on the wiring diagram of the automation system.

In an embodiment, the maintenance management module is configured for automatically executing the determined corrective actions in the automation system after a predefined time interval. In an embodiment, the predefined time interval may be defined by the user. In a preferred embodiment, upon outputting the determined corrective actions, a timer for the pre-defined time interval is started to wait for an operator or a field engineer to act on the outputted corrective actions. If the operator or the field engineer fails to act on the corrective actions within the predefined time interval, then the corrective actions are automatically executed in the automation system.

The object of the present invention is achieved by a maintenance management system for assisting operator to rectify fault in an automation system of a plant. The maintenance management system comprises a server configured for performing method steps described above, and one or more handheld devices adapted for assisting field engineer in maintenance and repair activities in the plant. The one or more handheld devices are communicatively coupled to the server via a network. The maintenance management system also comprises a maintenance database configured for storing information related to maintenance of the automation system.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a plant environment comprising an automation system, according to an embodiment of the present invention;
- FIG 2: illustrates a block diagram of a server of FIG 1, according to an embodiment of the present invention;
- FIG 3: is a process flowchart illustrating an exemplary method of generating an engineering data table in the automation system, according to an embodiment of the present invention;
- FIG 4: is a process flowchart illustrating an exemplary method of assisting operator to rectify a fault in the automation system, according to an embodiment of the present invention;
- FIG 5: is a process flowchart illustrating an exemplary method of predicting an abnormal condition associated with equipment in the automation system, according to an embodiment of the present invention;
- FIG 6: is a process flowchart illustrating an exemplary method of determining the corrective action for the predicted abnormal condition associated with the equipment in the automation system, according to an embodiment of the present invention;
- FIG 7: is a screenshot view of plant data displayed on a human-machine interface of the automation system, according to an embodiment of the present invention;
- FIG 8: is a screenshot view of plant data displayed on a human-machine interface of the automation system, according to another embodiment of the present invention; and
- FIG 9: illustrates a schematic representation of the handheld device displaying corrective action and the predicted abnormal condition associated with the equipment, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

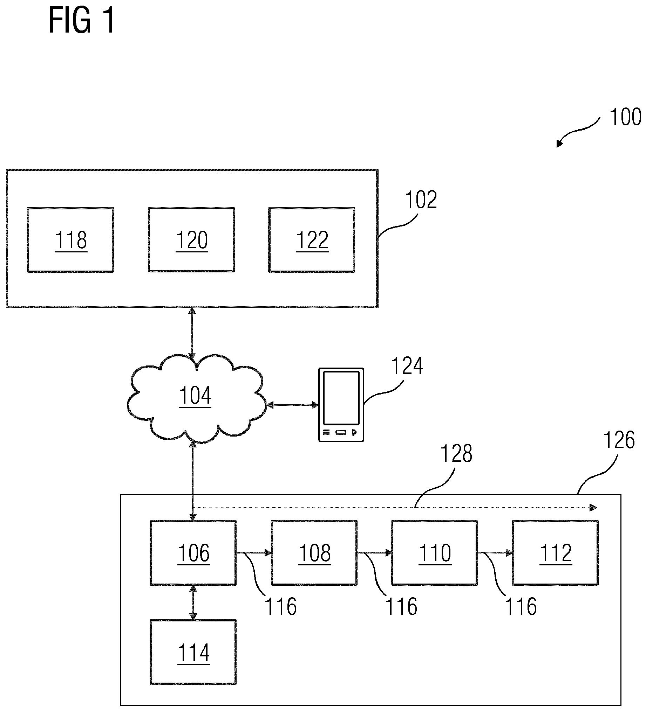

FIG 1 is a schematic representation of a plant environment 100 comprising an automation system 126, according to an embodiment of the present invention. The automation system 126 comprises one or more automation devices, such as a controller 106, an input/output (I/O) module 108, a terminal box 110, a field device 112. The terms 'automation devices' and 'equipments' are used interchangeably throughout the specification. The controller 106 is connected to the field device 112 via the I/O module 108 and the terminal box 110 using signal wires 116. The HMI 114 is connected to the controller 106 for monitoring and controlling the plant environment 100. In an exemplary implementation, the HMI 114 may be a distributed control system panel displaying information associated with various processes and equipments in the plant environment 100.

The controller 106 communicates control signals to the field device 112 via the signal wires 116, thereby making the field device 112 to perform an action based on the control signals. The controller 106 generates control signals in response to commands received from the HMI 114. The commands are initiated by the operator to control processes occurring in the plant environment 100 in response to parameters associated with the processes sensed by sensors deployed in the plant environment 100. The automation system 126 illustrated in FIG 1 is an exemplary automation system and may include a plurality of controllers, I/O devices, terminal boxes and field devices, and HMI in the plant environment 100. However, for the purpose of illustration, a portion of the automation system 126 is illustrated in FIG 1.

The plant environment 100 also comprises a maintenance management system. The maintenance management system comprises a server 102 connected to the automation system 126, and a handheld device(s) 124 of a field engineer via a network 104. The server 102 is configured for providing maintenance related assistance to the field engineer via the handheld device 124. In an embodiment, the server 102 is configured for assisting operator to rectify a fault in the automation system 126. The server 102 is also configured for outputting the corrective action and the abnormal condition associated with the equipment in the automation system 126 on the handheld device 124 of the field engineer, thereby assisting the field engineer to rectify the fault. The server 102 also communicates with the automation system 126 during maintenance activity or during plant operation.

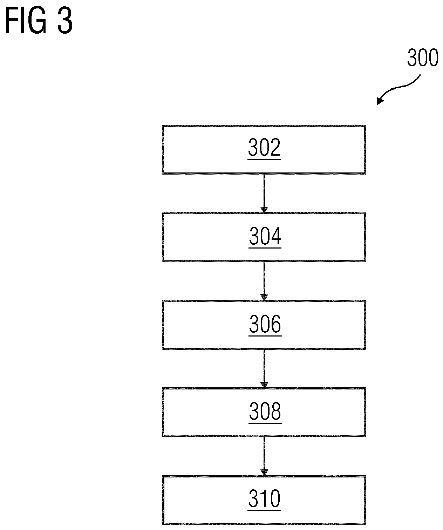

As shown in FIG 1, the server 102 comprises a maintenance management module 118, a maintenance database 120, and a communication interface 122. The maintenance management module 118 is configured for providing an engineering data table of the automation system 126. The maintenance management module 118 generates the engineering data table by merging wiring diagrams of the automation system 126, interlock tables of the automation system 126, and equipment characteristics table of the automation system 126. Each of these wiring diagrams, interlock table and the equipment characteristic table are generated and stored in the maintenance database 120 at the time of commissioning, installation and engineering. The engineering data table comprises physical wiring interconnections between the equipments in the automation system 126, connection paths 128 connecting automation devices 106, 112 via junction points, the interlock table associated with the automation system 126, unique addresses associated with the connection paths, unique identifiers associated with the automation devices 106,112 and the junction points, and the equipment characteristic table associated with each equipment 106, 112 in the automation system 126. The wiring diagram comprises start and end points of a closed loop and interconnectivity between each equipments in the automation system 126 and the interlock table associated with the automation system 126 comprises process interlock information and safety interlock information and the equipment characteristic table comprises equipment type information, equipment limit information, operating conditions, material used, vendor details, and equipment serial numbers. The steps involved in generating the engineering data table are explained in greater detail in the following description with reference to FIG 3.

The maintenance management module 118 is configured for predicting an abnormal condition associated with equipment 106, 112 in the automation system 126 based on the engineering data table and a real-time plant engineering data. The real-time plant engineering data comprises interlock information of the plant environment 100 and a current equipment characteristic of each equipment 106,112 in the automation system 126. The abnormal condition comprises one or more alarms, warning condition of the equipment 106, 112, danger condition of the equipment 106, 112, and one or more fault conditions of the equipment 106,112. In an embodiment, the maintenance management module 118 predicts the abnormal condition based on an occurrence of an event. The event can be a request for rectifying the fault, an alarm for occurrence of the fault, and so on. In predicting the abnormal condition of the automation system 126, the maintenance management module 118 is configured for predicting the abnormal condition associated with the equipment 106, 112 in the automation system 126 based on an amount of time required by the equipment characteristic of the equipment 106, 112 to reach a maximum threshold point associated with the equipment 106, 112. In specific, the maintenance management module 118 is configured for receiving the real-time plant engineering data from the plant environment 100. Further, the maintenance management module 118 is configured for identifying a maximum threshold point associated with each characteristic of the equipment 106, 112 in the automation system 126 from the engineering data table. The maximum threshold point associated with each characteristics of the equipment 106, 112 is defined in the equipment characteristics table. The maximum threshold point indicates the maximum value which is the maximum process value (pressure/ temperature/ flow and the like) until which an equipment can work normally or behaves normally with respect to an action taken as per process rules of the plant.

Further, the maintenance management module 118 is configured for comparing the maximum threshold point associated with each characteristic of the equipment 106, 112 in the automation system 126 with the current equipment characteristic in the received real-time plant engineering data. In an exemplary embodiment, the maximum threshold point associated with temperature value of the equipment, such as 106, 112 is compared with the current temperature value of the equipment 106, 112. In this case, the temperature value is one example characteristic of the equipment 106, 112. The maintenance management module 118 is configured for computing an amount of time required by the equipment characteristic to reach the maximum threshold point based on the comparison. Also, the maintenance management module 118 is configured for predicting the abnormal condition associated with the equipment 106, 112 in the automation system 126 based on the computed amount of time required by the equipment characteristic to reach the maximum threshold point.

The maintenance management module 118 is configured for determining a corrective action for the predicted abnormal condition associated with the equipment 106, 112 in the automation system 126. The corrective action rectifies the predicted abnormal condition associated with the equipment 106, 112. The corrective action comprises one or more operations such as closing or opening of control valves, tune the PID values (for example, increase or decrease P/D/I factor, raw material inflow down/up, output or production rate down or up, changes in process rules and the like.

In determining the corrective action, the maintenance management module 118 is configured for determining the corrective action for the predicted condition associated with the equipment 106, 112 in the automation system 126 based on a historical data stored in a database, such as the maintenance database 120. In an alternate embodiment, the maintenance management module 118 is configured for temporarily creating a simulation environment corresponding to the real-time plant engineering data associated with the plant environment 100. The simulation environment, for example, is a virtual environment replicating the process philosophy of the actual plant environment. Technologies such as digital twin can be utilized to create the simulation environment and exact equipment digital replica can be created which can give response and analysis of the action taken on the equipment as if it is used at real-time in plant environment.

Further, the maintenance management module 118 is configured for simulating predicted abnormal condition associated with the equipment 106, 112 in the simulation environment to identify the corrective action. The maintenance management module 118 is further configured for outputting the corrective action for the predicted abnormal condition associated with the equipment 106, 112. A positive simulation result is yielded by the corrective action. In another alternate embodiment, the maintenance management module 118 is configured for determining a first alternate corrective action for the predicted abnormal condition associated with the equipment 106, 112 if the simulation result is negative. The first alternate corrective action is determined based on engineering data rules. For example, the engineering data rules may be P&ID rules. Further, the maintenance management module 118 is configured for determining a second alternate corrective action for the predicted abnormal condition associated with the equipment 106, 112 based on dependency of each closed loop in the plant environment 100. The dependency of each closed loop in the plant environment 100 is obtained from the engineering data table.

The maintenance management module 118 is configured for outputting the determined corrective action and the predicted abnormal condition associated with the equipment 106, 112 on a user interface.

The maintenance management module 118 is configured for determining a faulty equipment in the automation system 126 based on the predicted abnormal condition and the engineering data table. In an embodiment, the predicted abnormal condition indicates the state of the equipment 106, 112 along with the equipment characteristics. Also, the predicted abnormal condition indicates the next values of the equipment characteristics with respect to time. Further, the engineering data table comprises equipment characteristic tables indicating the range of limits of the equipment 106, 112. Based on the state of the equipment 106, 112, the next values of the equipment characteristics, and the engineering data table, the faulty equipment is determined. The maintenance management module 118 is configured for determining a location of the faulty equipment in the automation system 126. The location of the faulty equipment is indicative of a physical location of the faulty equipment in the automation system 126. Additionally, the maintenance management module 118 is configured for outputting the location of the faulty equipment on the user interface. In an embodiment, the location of the faulty equipment is superimposed on the wiring diagram of the automation system 126.

In an embodiment, the maintenance management module 118 is configured for automatically executing the determined corrective actions in the automation system 126 after a predefined time interval. In an embodiment, the predefined time interval may be defined by the user. In a preferred embodiment, upon outputting the determined corrective actions, a timer for the predefined time interval is started to wait for an operator or a field engineer to act on the outputted corrective actions. If the operator or the field engineer fails to act on the corrective actions within the predefined time interval, then the corrective actions are automatically executed in the automation system 126 by the maintenance management module 118.

The maintenance database 120 stores the engineering data table of the automation system 126. The maintenance database 120 also stores wiring diagrams, interlock tables and equipment characteristic tables of the automation system 126 in a predefined format. Wiring diagrams, interlock tables and equipment characteristic tables are customizable. Wiring diagram contains the equipment location information. This is static table and generally equipment location does not change after installation and commissioning phase. Generally, all wiring and routing is static. The field equipment also has fixed tags and fixed junction box, cabinet location and so on. These wiring and routing diagrams are prepared by latest tools like auto cad, E plan in specified format. During the engineering and commissioning phase, engineer/operator takes the reference of the wiring diagram to install the field equipment and make the connection between the engineering system and field equipment.
Similarly, interlock table is also static as dependency of the process loops and its philosophy rarely change in plant operation. Equipment also has fixed characteristics and limits. By using all these information, a defined structure or format can be created and stored in the maintenance database 120.
Further, the maintenance database 120 also store the real-time plant engineering data received from the automation system 126. The maintenance database 120 stores the predicted abnormal conditions of the automation system 126. Further, the maintenance database 120 stores the corrective actions, including alternate corrective actions determined for the predicted abnormal condition. The maintenance database 120 may also store information of junction points at which faults previously occurred and repaired. This information assists in determining whether such fault is repeatedly occurring at a specific junction point ahead of time. Also, the information may help in conducting preventive maintenance of the junction points where there is likelihood of occurrence of the fault. The maintenance database 120 may store information associated with the field engineer as such a profile of the field engineer. The information helps in contacting the field engineer in case a fault is identified in the plant environment 100. The communication interface 122 enables the server 102 to communicate with the controller 106 and the handheld device(s) 124 via one or more communication protocols known in the art.

One skilled in the art could understand that the server 102 may be a dedicated server residing inside a plant or a remote server residing outside the plant. For example, the server 102 may be a component of a distributed control system. Also, one skilled in the art could understand that the server 102 may be a component of a cloud infrastructure for providing the functionality described above. Also, one can envision that the maintenance management module 118 can be part of the distributed control system or a cloud infrastructure. The maintenance management module 118 may take a form of software application executed on the distributed control system or hosted on a cloud platform and executed by one or more processors on the cloud platform. Alternatively, the maintenance management module 118 can be embedded software in a control system code.

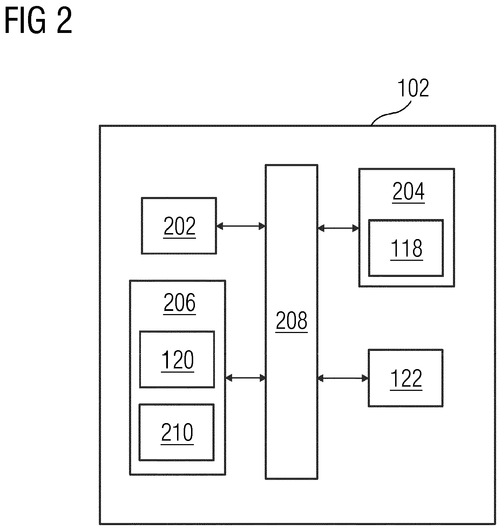

FIG 2 illustrates a block diagram of the server 102 of FIG 1, according to an embodiment of the present invention. In FIG 1, the server 102 comprises a processor 202, a memory 204, a storage unit 206, a bus 208, and the communication interface 122.

The processor 202, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 202 may also include embedded controllers, such as generic or programmable logic devices or arrays, application specific integrated circuits, single-chip computers, and the like.

The memory 204 may be volatile memory and non-volatile memory. A variety of computer-readable storage media may be stored in and accessed from the memory 204. The memory 204 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 204 includes the maintenance management module 118. The maintenance management module 118 is stored in the form of machine-readable instructions on any of the above-mentioned storage media and may be executed by the processor 202.

For example, when the instructions are executed by the processor 202, the maintenance management module 118, causes the processor 202, to perform the functionalities described above. In an embodiment, the maintenance management module 118 causes the processor 202 to predict an abnormal condition associated with equipment 106, 112 in the automation system 126 based on the engineering data table and a real-time plant engineering data and determine a corrective action for the predicted abnormal condition associated with the equipment 106, 112 in the automation system 126. Also, the maintenance management module 118 causes the processor 202 to output the determined corrective action and the predicted abnormal condition associated with the equipment 106, 112 on a user interface.

Further, the maintenance management module 118 causes the processor 202 to determine faulty equipment in the automation system 126 based on the predicted abnormal condition and the engineering data table. In an embodiment, the predicted abnormal condition indicates the state of the equipment 106, 112 along with the equipment characteristics. Also, the predicted abnormal condition indicates the next values of the equipment characteristics with respect to time. Further, the engineering data table comprises equipment characteristic tables indicating the range of limits of the equipment 106, 112. Based on the state of the equipment 106, 112, the next values of the equipment characteristics, and the engineering data table, the faulty equipment is determined. The maintenance management module 118 causes the processor 202 to determine a location of the faulty equipment in the automation system 126. The location of the faulty equipment is indicative of a physical location of the faulty equipment in the automation system 126. Additionally, the maintenance management module 118 causes the processor 202 to output the location of the faulty equipment on the user interface. In an embodiment, the location of the faulty equipment is superimposed on the wiring diagram of the automation system 126.

In an embodiment, the maintenance management module 118 causes the processor 202 to automatically execute the determined corrective actions in the automation system after a predefined time interval. In an embodiment, the predefined time interval may be defined by the user. In a preferred embodiment, upon outputting the determined corrective actions, a timer for the predefined time interval is started to wait for an operator or a field engineer to act on the outputted corrective actions. If the operator or the field engineer fails to act on the corrective actions within the predefined time interval, then the corrective actions are automatically executed in the automation system 126 by the maintenance management module 118.

The storage unit 206 may be a non-transitory storage medium configured for storing the maintenance database 120 and a distributed control system database 210. The maintenance database 120 also stores simulation interfaces for temporarily generating simulation environment and interacting with the simulation environment. The distributed control system (DCS) database 210 is configured to store DCS logics, process philosophy data.

The communication interface 122 may be a network interface for enabling communication between the server 102, and the automation system 126 and the handheld device 124 using communication protocols. The bus 208 acts as an interconnect unit between the processor 202, the memory 204, the storage unit 206 and the communication interface 122.

FIG 3 is a process flowchart 300 illustrating an exemplary method of generating an engineering data table in the automation system 126, according to an embodiment of the present invention. At step 302, a wiring diagram is created by merging wiring diagrams. The wiring diagram comprises start and end points of a closed loop and interconnectivity between each equipment 106, 112 in the automation system 126. In a preferred embodiment, the wiring diagram comprises one or more nodes. The nodes in the wiring diagram can be a junction box, terminal points etc. A unique identifier is assigned to each node so as to form a unique connection path between the connection devices. The combination of the unique identifiers associated with the nodes that are part of the connection path forms a unique address of the connection path. The wiring diagrams associated with a physical wiring system of the automation system 126 are imported by the server 102. For example, the server 102 imports a wiring diagram created during engineering of the automation system 126 and a wiring diagram created during commissioning or installation of the automation system 126 in an extendable mark-up language format. The wiring diagrams are imported from external databases such as engineering database residing in an engineering system and a commissioning database residing in a commissioning system. For example, a wiring diagram obtained from the commissioning system may be a process hookup diagram and the wiring diagram obtained from the engineering system may be an engineering diagram. In an embodiment, the wiring diagram indicates the start and end point of a loop. An automation function instance associated with respective automation device 106, 112 in the automation system 126 is linked to the corresponding unique identifier in the wiring diagram. The automation function instances are linked to respective unique identifiers such as information pertaining to the automation function instance in a distributed control system can be synchronized in real-time. This enables the maintenance management module 118 to display information associated with automatic function instances in a wiring diagram in real-time. The wiring diagram is stored in the maintenance database 120. The maintenance management module 118 uses the wiring diagram to set the start and end point of the loop. Hence, each loop and its boundaries are fixed. The wiring diagram enables the field operator to determine faulty signal wiring in fields and trace the faulty signal wiring during fault occurrence. An exemplary wiring diagram is as shown in table 1:

**Table. 1**

| Loop 1 | | | | | | | | | |
|---|---|---|---|---|---|---|---|---|---|
| For TCV2291 control valve | | | | | | | | | |
| Control ler | Rack | IO car d | Terminal Number | | Junc tion Box | Cabinet | Termina l Number Fiel d | Equipment unique Number | Loop Code |
| CT40 | R08 | IOC 06 | TB40 | | JB10 | CBF 20 | TBF 60 | TCV2291 | CT40R08 IOC06TB 40JB10C BF20TBF 60TCV2291 |

At step 304, an interlock table is created at the time of commissioning. The interlock table indicates interlock conditions, interlock parameters and dependency of interlocks associated with the automation system 126. In a preferred embodiment, the interlock table comprises process interlocks and safety interlocks. The process interlocks define conditions which are necessary to fulfill the safe and successful condition of production. These interlocks prevent incorrect operation or possible damage to the process or equipment, such as, 106, 112 in the automation system 126. Examples of process interlocks include but not limited to changing the PID parameter, interlock between gas flow increasing or decreasing valve and temperature sensor, and so on. Safety interlock prevents possible damage or death to human operating the process or equipment 106, 112. For example, safety integrity level loops, (standard defined by IEC 61508 for the process loops and evaluation), Hazard and operability analysis involved by process department and end user are few examples of safety interlocks. All process and safety interlocks are defined at the time of commissioning and engineering at equipment level and engineering level. Based on these process and safety interlocks, the interlock table is created. In an exemplary embodiment, the interlock table may be created using tools such as AutoCAD. Further, the interlock table is created based on P&ID diagrams associated with the automation system 126. The maintenance management module 118 uses the interlock table to set the interlocks of the loops and mark their respective condition. An exemplary interlock table is as shown in table 2:

**Table. 2**

| Loop | PID Loop from DCS logic | bypass valve | Bypass Loop | Final Element | Interconnected Loop list | Equipment List |
|---|---|---|---|---|---|---|
| CT40R08 IOC06TB 40JB10C BF20TBF 60TCV22 91 | PIDTCV2291 SDV2291APT 2290TIC229 1 | BYPS DV22 91 | BYPSDV 2291BN BC2290 TIC229 1 | NBC-2290 | TCV2292 NBC2290 PBE2291 | TCV2292 |
| | | | | | | NBC2290 |
| | | | | | | PBE2291 |
| | | | | | TCV2292 | TCV2292 |
| | | | | | NBC2290 | |
| | | | | | HBL2296 | |
| | | | | | PBE2298 | |
| | | | | | | NBC2290 |
| | | | | | | HBL2296 |
| | | | | | | PBE2298 |

At step 306, an equipment characteristic table associated with the automation system 126 is created. The equipment characteristic table comprises information of equipment type, equipment minimum and maximum threshold limits, equipment operating conditions, material made, vendor details, equipment serial number, and the like. Each of these information are gathered from external databases such as engineering database residing in an engineering system and a commissioning database residing in a commissioning system. Further, the equipment characteristic information as listed above are gathered during commissioning and stored in the maintenance database 120 in the form of table. In an embodiment, the information such as the operating condition of an equipment 106, 112 are gathered from the equipment 106, 112 installed in the automation system 126 using Internet of Things (IoT) mechanisms. In an exemplary embodiment, if the equipments 106, 112 in the automation system 126 are made IoT enabled, the maintenance management module 118 gathers the information related to the equipment 106, 112 such as operating conditions directly from the equipments 106, 112. An exemplary equipment characteristic table is as shown in table 3:

**Table. 3**

| Equipment List | Type | Vendor | Mode1 | MLFB / Model Number | Temperature range | Pressure internal | Pressure Maximum | Flowrange | Vibration displacement | Current range | Speed | Shaft Height | Min Power | Max Power |
|---|---|---|---|---|---|---|---|---|---|---|---|---|---|---|
| TCV2 292 | 3-way temperature Control valve | Com pany x | G | 1612-7f-de-14-ae | 100 degree /212 ° F | 10 bar | 16 bar | 72 0 m3 /h | 1.6 mm | | | | | |
| NBC2 290 | Cyelo | Com pany Y | P40 | 114 dsf dfd - dfd - dd5 | 150 degree | 20 bar | 25 bar | | | | | | | |
| PBE2 291 | Motor | Com pany Y | LO HER VA RI O IP S4 | 131 | 200 degree | | | | 37 mico mm | | 29 76 rp m | 355 mm-100 0mm | 14 0 KW | 710 0KW |
| PBE2 298 | Motor | Com pany z | LO HE R VA RI O IP S5 | 142 | 150 degree | | | | 37 mico mm | | 29 76 rp m | 355 mm-100 0mm | 12 0 KW | 610 0KW |
| TCV2 296 | 3-way temperature Control valve | Company z | G | 11-12-455 - FF-12-d0 | 121 degree / 250 F | 360 PSI | 360 PSIG | 10 00 m3 /h | 1.2 mm | | | | | |

At step 308, an engineering data table is generated based on the wiring diagram associated with the automation system 126, the interlock table associated with the automation system 126 and the equipment characteristics table associated with the automation system 126. In specific, the engineering data table is generated by logically merging the wiring diagram, the interlock table and the equipment characteristic table. In an embodiment, the engineering data table comprises physical wiring interconnections between the equipments 106, 112 in the automation system 126, connection paths connecting the equipments 106, 112 via junction points, the interlock table, unique addresses associated with the connection paths, unique identifiers associated with the equipments 106, 112 and the junction points, and the equipment characteristic table. An exemplary engineering data table is as shown in table 4:

**Table 4**

| **Enginering data table** | | | | | | | | | | | | | | | |
|---|---|---|---|---|---|---|---|---|---|---|---|---|---|---|---|
| Wiring Matrix | | | | | | | | | Interlock data table | | | | | Equipment Charactristrict ics table | |
| Control ler | Rack | IO card | Termina l Number | Junctio n Box | Cabinet | Termina l Number Field | Equipme nt unique Number | Loop Code | PID Loop from DCS logic | bypass valve | Bypass Loop | Final Element | Interco nnected Loop list | Equipme nt List | Replace with |
| CT40 | R08 | I0C06 | TB40 | JB10 | CBF20 | TBF60 | TCV2291 | CT40R081 | PIDTCV22 | BYPSDV22 | BYPSDV22 | NBC-2290 | TCV2292M | TCV2292M | TCV2296 |
| | | | | | | | | | | | | | | NBC2290 | |
| | | | | | | | | | | | | | | PBE2291 | |
| | | | | | | | | | | | | | TCV2292M | TCV2292 | |
| | | | | | | | | | | | | | | NBC2290 | |
| | | | | | | | | | | | | | | HBL2296 | |
| | | | | | | | | | | | | | | PBE2298 | |
| CT25 | R01 | IOC04 | TB10 | JB20 | CBF22 | TBF70 | TCV2292 | CT25R01I | TCV2292NBC2290PBE2291 | | | NBC-2290 | CT40R081 | TCV2292 | |
| | | | | | | | | | | | | | | PBE2291 | |
| CT02 | R045 | IOC08 | TB77 | JB10 | CBF04 | TBF40 | TCV2292 | CT02R045 | TCV2292NBC2290HBL2296PB | | | NBC-2290 | CT40R08 | TCV22 92 | |
| | | | | | | | | | | | | | | PBE2298 | |

At step 310, the engineering data table is stored in the maintenance database 120.

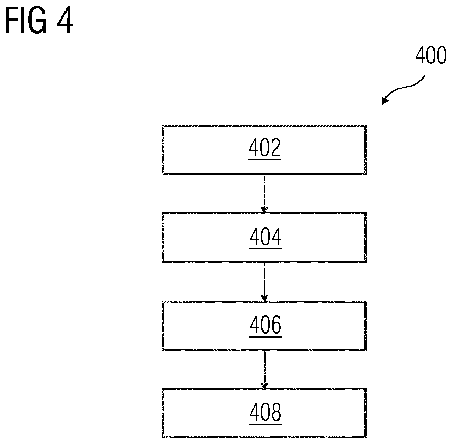

FIG 4 is a process flowchart 400 illustrating an exemplary of assisting operator to rectify a fault in the automation system 126, according to an embodiment of the present invention. At step 402, an engineering data table of the automation system 126 is provided. The engineering data table is generated using a wiring diagram associated with the automation system 126, the interlock table associated with the automation system 126 and the equipment characteristics table associated with the automation system 126. The engineering data table comprises physical wiring interconnections between the equipments 106, 112 in the automation system 126, connection paths connecting equipments 106, 112 via junction points, the interlock table associated with the automation system 126, unique addresses associated with the connection paths, unique identifiers associated with the equipments 106, 112 and the junction points, and the equipment characteristic table associated with each equipment 106, 112 in the automation system 126. The wiring diagram comprises start and end points of a closed loop and interconnectivity between each equipments 106, 112 in the automation system 126. The interlock table associated with the automation system 126 comprises process interlock information and safety interlock information. The equipment characteristic table comprises equipment type information, equipment limit information, operating conditions, material used, vendor details, and equipment serial number, and the like.

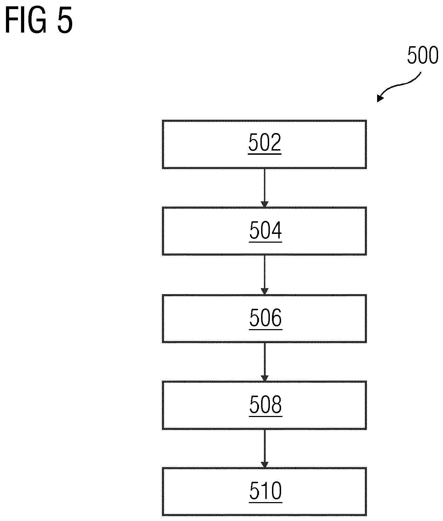

At step 404, an abnormal condition associated with an equipment 106, 112 in the automation system 126 is predicted based on the engineering data table and a real-time plant engineering data. The abnormal condition comprises one or more alarms, warning condition of the equipment 106, 112, danger condition of the equipment 106, 112, and one or more fault conditions of the equipment 106, 112. The steps of predicting the abnormal condition is explained in greater detail in FIG. 5.

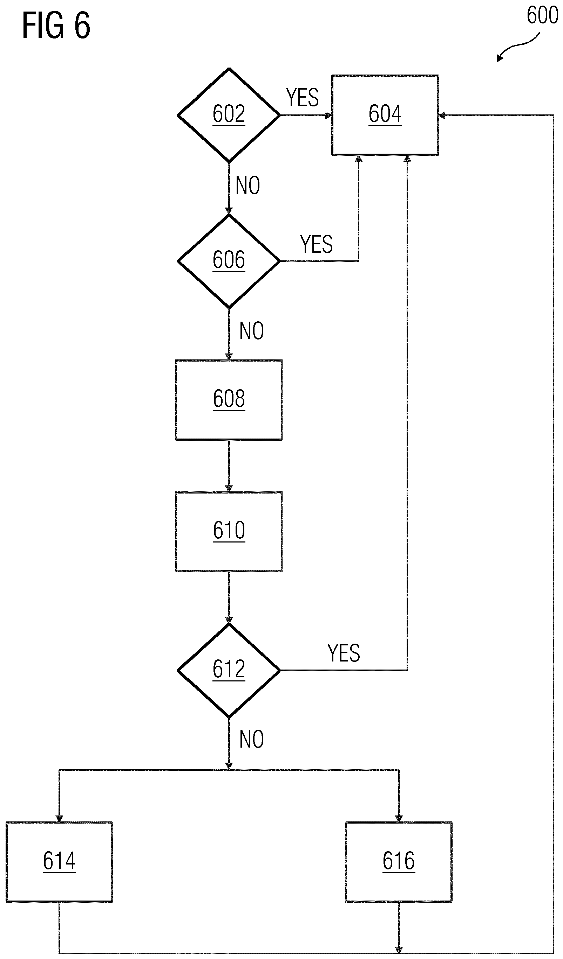

At step 406, a corrective action for the predicted abnormal condition associated with the equipment 106, 112 in the automation system 126 is determined. The corrective action rectifies the predicted abnormal condition associated with the equipment 106, 112. The corrective action comprises one or more operations such as closing or opening of control valves, tune the PID values (for example, increase or decrease P/D/I factor, raw material inflow down/up, output or production rate down or up, changes in process rules and the like. The steps in determining the corrective action is explained in greater detail in FIG 6.

At step 408, the determined corrective action and the predicted abnormal condition associated with the equipment 106, 112 is outputted on a user interface. In an embodiment, the determined corrective action and the predicted abnormal condition is displayed on the user interface of the server 102 as well as the handheld device 124 used by the field operator.

FIG 5 is a process flowchart 500 illustrating an exemplary method of predicting an abnormal condition associated with equipment 106, 112 in the automation system 126, according to an embodiment of the present invention. At step 502, the real-time plant engineering data is received from the plant environment 100. The real-time plant engineering data comprises interlock information of the automation system 126 and a current equipment characteristic of each equipment 106, 112 in the automation system 126. The real-time plant engineering data may be stored in the maintenance database 210 and later retrieved by the maintenance management module 118 based on an occurrence of an event. The event can be a request for rectifying the fault, an alarm for occurrence of the fault, and so on.

At step 504, a maximum threshold point associated with each characteristic of the equipment 106, 112 in the automation system 126 is identified from the engineering data table. The engineering data table comprises maximum threshold point associated with each characteristic of the equipment 106, 112 in the automation system 126. For example, a motor can have a maximum threshold point/limit for temperature (which is the equipment characteristic) upto 200 degrees. This maximum threshold point of the temperature for the motor is identified.

At step 506, the maximum threshold point associated with each characteristic of the equipment 106, 112 in the automation system 126 is compared with the current equipment characteristic in the received real-time plant engineering data. For example, the current temperature value of the motor as present in the real-time engineering data is compared with the maximum temperature limit of the motor as present in the engineering data table. In specific, the current temperature value of the motor may be 120 degrees and the maximum temperature limit of the motor may be 200 degrees.

At step 508, an amount of time required by the equipment characteristic to reach the maximum threshold point is computed based on the comparison. The amount of time required by the equipment characteristic to reach the maximum threshold point is computed using any known machine learning algorithms, or artificial intelligence algorithms, such as, Time series forecasting like ARIMA, CALMAN filter, Neural network (Recurring Neural network, ALSTM (Low short turn memory) Neural network) and the like.

Considering the same example above of a motor, the amount of time required by the temperature value to reach the maximum threshold point is calculated. For example, if the maximum threshold limit of temperature is 200 degree, and the current temperature value is 120 degree, the amount of time required by the motor to reach 120 degree is calculated.

At step 510, the abnormal condition associated with the equipment 106, 112 in the automation system 126 is then predicted based on the computed amount of time required by the equipment characteristic to reach the maximum threshold point. For example, if the temperature value of the motor reaches the maximum threshold limit in 70 minutes, then this abnormal condition of the motor is predicted and displayed on the user interface of the server 102 and the handheld device 124.

FIG 6 is a process flowchart 600 illustrating an exemplary method of determining the corrective action for the predicted abnormal condition associated with the equipment 106, 112 in the automation system 126, according to an embodiment of the present invention. At step 602, it is determined whether the corrective action for the predicted condition associated with the equipment 106, 112 in the automation system 126 is present in the maintenance database 120. Maintenance database 120 stores past conditions of the equipment 106, 112 in the automation system 126. The past conditions of the equipment 106, 112 are stored at the time of commissioning. A corresponding suitable corrective action for all the past conditions of the equipment 106, 112 are also stored in the maintenance database 120. In an embodiment, it is determined whether the predicted abnormal condition matches with any of the pre-stored past conditions. If yes, then the corresponding corrective action pre-stored along with the past similar condition is retrieved.

At step 604, the corresponding corrective action pre-stored along with the past similar condition is outputted on the user interface of the server 102 and the user interface of the handheld device 124.

Alternatively, if it is determined that the corrective action for the predicted condition associated with the equipment 106, 112 in the automation system 126 is not present in the maintenance database 120, then at step 606 it is determined whether a recommended corrective action to be taken during the predicted abnormal condition is present in the maintenance database 120. The recommended corrective actions may be predefined by the operators and stored in the maintenance database 120. In case for example, the predicted abnormal condition is a standard condition, such as blank screen, computer peripheral defect, CPU crash, and so on, then a set of recommended corrective actions for each of these standard conditions are defined and stored in the maintenance database 120. In an embodiment, if the predicted abnormal condition is a standard condition, then it is determined whether there are any recommended corrective actions to be taken. If there are any recommended corrective actions present in the maintenance database 120, then the recommended corrective actions are outputted on the user interface of the server 102 and the user interface of the handheld device 124.

On the other hand, if the recommended corrective action to be taken during the predicted abnormal condition is not present in the maintenance database 120, then at step 608, a simulation environment corresponding to the real-time plant engineering data is temporarily created. This is achieved by initially copying real time process philosophy data and process data of the plant environment 100 in simulation software and then simulating the predefined abnormal condition with the current process output. If output is favorable, then the corrective action used to correct the predicted abnormal condition by using machine learning/artificial intelligence algorithms is outputted.

The simulation environment comprises a virtual plant setup emulating the automation system 126 as in the plant environment 100. The automation system 126 is emulated using virtual machines having exact same configuration as that of the equipments 106, 112 in the automation system 126.

At step 610, predicted abnormal condition associated with the equipment 106, 112 is simulated in the simulation environment to identify the behavior of the plant environment 100 and to identify corrective action for the predicted abnormal condition. The predicted abnormal condition is simulated in the simulation environment based on a set of rules. The set of rules may include process logic rules like PID tuning rules or interlocks rules or interlocks defined.

At step 612, it is determined whether the result of simulation is positive or negative. If the result of simulation is positive, then the corrective action used for rectification of the predicted abnormal condition during simulation is identified and outputted on the user interface of the server 102 and the user interface of the handheld device 124. However, if the result of simulation is negative, then at step 614, a first alternate corrective action for the predicted abnormal condition is determined based on engineering data rules. For example, the engineering data rules may be P&ID rules. In order to determine the first alternate corrective action based on the engineering data rules, a set of reverse actions are carried out on the PID values. For example, if D factor of PID increases, then in simulation the D factor is decreased. Similarly, if a control valve is open in actual plant environment 100, then in simulation, the control valve is closed. In this way, a first alternate corrective action for the predicted abnormal condition is determined and outputted on the user interface of the server 102 and the user interface of the handheld device 124.

On the other hand, at step 616, a second alternate corrective action for the predicted abnormal condition is also determined based on dependency of each closed loop in the plant environment 100. The dependency of each closed loop in the plant environment 100 is obtained from the engineering data table.

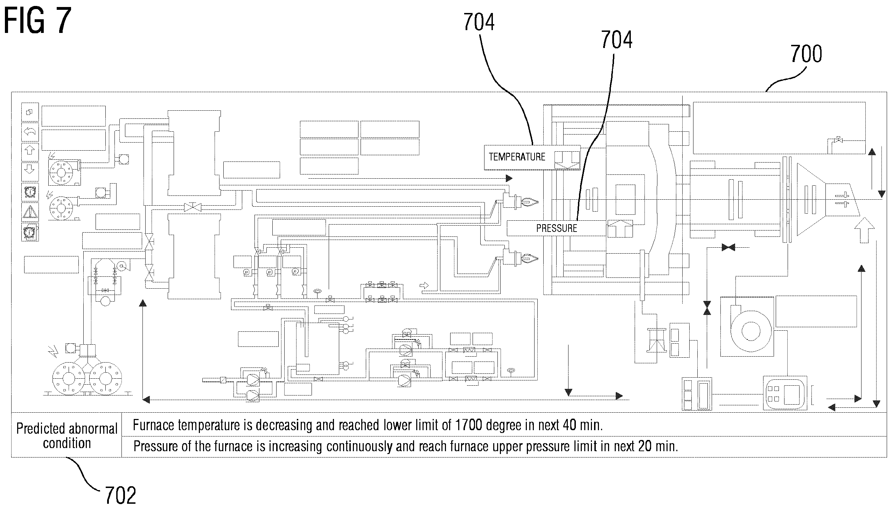

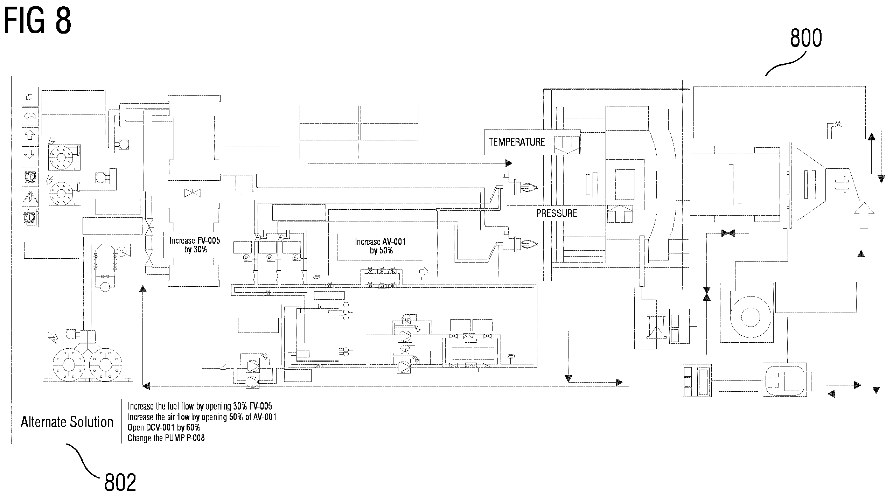

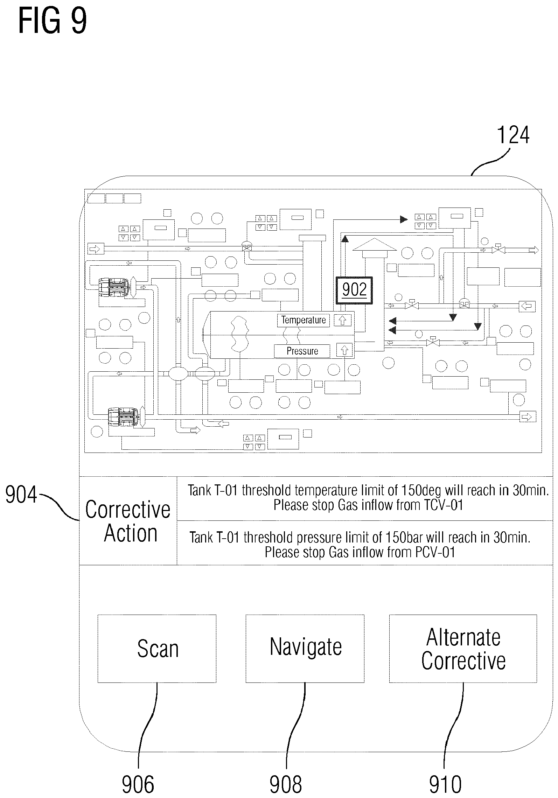

FIG 7 is a screenshot view 700 of plant data displayed on a human-machine interface, such as 114 of the automation system 126, according to an embodiment of the present invention. In FIG 7, the human-machine interface such as 114 displays a process and equipment data of the plant environment such as 100. When an event occurs in the automation system such as 126, the human-machine interface such as 114 displays predicted abnormal condition 702 indicative of occurrence of a fault at particular equipment in the plant environment such as 100. The human-machine interface such as 114 also displays the state of the equipment characteristics 704 of the equipment. Further, the human-machine interface such as 114 also displays the location of the faulty equipment. Also, the human-machine interface such as 114 checks with an operator as whether corrective action needs to be determined automatically. If the operator instructs the human-machine interface such as 114 to provide corrective action for the predicted abnormal condition, the human-machine interface such as 114 sends a command to the server such as 102 via the controller such as 106. Accordingly, the server such as 102 determines corrective action for the predicted abnormal condition and outputs the corrective action on the server 102 and the handheld device such as 124 as shown in FIG 8 and FIG 9. In FIG. 7, the predicted abnormal condition 702 is displayed as "furnace temperature is decreasing and reached lower limit of 1700 degree in next 40 minutes" and "pressure of furnace is increasing continuously and reach furnace upper pressure limit in next 20 minutes".

FIG 8 is a screenshot view 800 of plant data displayed on a human-machine interface, such as 114 of the automation system 126, according to another embodiment of the present invention. In FIG 8, the human-machine interface such as 114 displays a process and equipment data of the plant environment such as 100. When once the abnormal condition of the automation system such as 126 is predicted, the human-machine interface such as 114 displays corrective action 802 to be taken for rectifying the predicted abnormal condition. In this example, the corrective action 802 is displayed as "increase the fuel flow by opening 30% of FV-005, increase the air flow by opening 50% of AV-001, open DCV-001 by 60% and change the pump P-008". Further, the human-machine interface such as 114 also displays the faulty equipment in the automation system 126. Also, the human-machine interface such as 114 checks with an operator as whether corrective action needs to be executed automatically. If the operator instructs the human-machine interface such as 114 to execute the corrective action for the predicted abnormal condition, the human-machine interface such as 114 sends a command to the server such as 102 via the controller such as 106. Accordingly, the server such as 102 automatically executes the corrective action for the predicted abnormal condition after a predefined time interval and display a successful execution message on the server 102 and the handheld device such as 124. The predefined time interval may be user defined. In specific, the server 102 waits for the predefined time interval upon displaying the corrective action such that the field engineer can act on the corrective action and execute the corrective action. Upon expiry of the predefined time interval, when no response is received from the field engineer, then the server 102 automatically executes the corrective actions in the automation system 126.

In an exemplary scenario, consider that Tank T-01 temperature and pressure is increasing continuously and the server 102 has generated an alarm for taking suitable action to control this situation. Assume that the temperature and pressure graphs of the tank-01 shown on the server 102 indicate that the PID cannot be controlled in an auto mode and manual action is to be taken. Considering that the operator is new to the plant and is unaware of full plant interlocks and situations. In this case, the operator takes the PID loop in manual mode and starts manually correcting the fault.

Conventionally, the operator performs an action on the alarm and shall wait to see the outcome. If the situation goes favorable then the operator continues to rectify the alarm in same direction and if the situation is not favorable then opposite action is performed by the operator. For example, in the same situation as temperature and pressure is constantly increasing, the operator increases the D factor of PID which open the control valve for example, TC2291. Hence, the gas inflow increases which further increases the temperature and pressure. In this particular scenario, if the temperature and pressure is not controlled in time, then the tank-01 may burst or suddenly shutdown, thereby decreasing the productivity of the plant and causing danger to human life.

However, in the present invention, considering the same situation as above, the abnormal condition of temperature and pressure constantly increasing at tank-01 is predicted well in advance and the corrective actions to be taken immediately is determined and outputted on the server 102 in order to completely control the situation in the plant. The end and starting point of the loop is also displayed on the server 102 as well as on the handheld device 124 enabling the field engineer or the operator to act on the condition immediately. Further, the server 102 shall also display the alternative corrective actions by which the situation can be in under control. For example, the alternate corrective actions in this scenario may include opening the raw material and decreasing the temperature valve opening by 50% and starting the outlet motor, for example, PBE-2291 such that the temperature and pressure value is decreased. The server 102 may output the possible faulty equipment causing this abnormal condition along with the reasons of fault, such as calibration error, equipment damage and so on. This helps the operator or the field engineer to know which equipment is faulty.

In another exemplary scenario, consider that the temperature and pressure of a furnace is to be maintained at constant such that the glass remains molted continuously. In this case, pressure of the furnace also depends on the out Air Damper. This Damper opens (to decrease the pressure) and closes (to increase the pressure) depending on the pressure requirement of the furnace. Generally, if pressure decreases, the temperature of the furnace increases. This is a common situation in close loop of temperature and pressure. However, in some situations, the Damper valve open/close movement has to be manually controlled because of some reasons (like more fuel supply because of malfunctioning of burner, more fuel gases release because of malfunctioning of Damper valve and so on). Hence, extra precaution has to be taken in operating the damper valve. If in any case, operator mishandles this situation, then the pressure or temperature increases suddenly causing an accident, production loss, or furnace blast. In the same situation, the present invention enables the operator or the field engineer to act in a controlled manner while operating the damper valve. For example, the present invention displays the predicted abnormal conditions with current danger and warning points, malfunctioning equipment and accordingly displays the corrective action that needs to execute to control the situation. Also, alternate corrective actions are displayed which allows the operator or the field engineer to act immediately on the predicted abnormal condition and thus control the plant efficiently. The alternate corrective actions in this case could be displayed as increasing opening of Fuel control valve FV-005 by 30% and increasing air control valve AV-001 by 60%. This increases the burner speed and also increases the temperature. Even though pressure is not immediately decreased but the temperature is maintained, the operation of the furnace need not be halted. This will give chance to maintenance to replace Pump P-008 and normalize the situation.

FIG 9 illustrates a schematic representation 900 of the handheld device, such as 124 displaying corrective action and the predicted abnormal condition associated with the equipment 106, 112, according to an embodiment of the present invention.

When the server 102 determines the corrective action for the predicted abnormal condition, the handheld device 124 displays the predicted abnormal condition 902 and the corrective action 904 on the plant process philosophy.

In some embodiments, the handheld device 124 navigates the field engineer from his current location to the location of the equipment at which the corrective actions are to be performed. The current location of the field engineer can be determined based on global positioning coordinates of the handheld device 124 or unique identifier of equipment sent by the field engineer via the handheld device 124. For example, the field engineer may send the unique identifier by scanning bar code or QR code associated with nearby equipment in the plant environment such as 100.

As shown in FIG 9, the handheld device 124 also displays an alternate corrective action button 910, a scan button 906, a navigate button 908, and a switch to DCS button. The alternate corrective action button 910 enables the field engineer to view the alternate corrective actions determined for the predicted abnormal condition of the equipment such as 106, 112. For example, when the user taps on the alternate corrective action button 710, the handheld device 124 sends a request for obtaining alternate corrective action to the server such as 102. Accordingly, the handheld device 124 displays the alternate corrective actions for the predicted abnormal condition.

The scan button 906 enables the field engineer to scan a QR code associated with nearby equipment, field device. The handheld device 124 communicates the scanned QR code to the server such as 102. The server such as 102 determines current location of the field engineer based on the QR code. The current location helps in computing the optimal route to navigate to the location of the equipment having abnormal condition.

The navigate button 908 enables the handheld device 124 to navigate of the field engineer from the current location to the location of the equipment via the optimal route. The switch to DCS button displays a distributed computing system (DCS) view on the handheld device 124. The DCS view enables the field engineer to access the plant data on the handheld device 124. Advantageously, the field engineer need not go to the human-machine interface such as 112 to access the plant data.

In an example scenario, a field operator scan a QR code associated with nearby equipment, field device using the handheld device 124. The handheld device 124 communicates the scanned QR code to the server such as 102. In an embodiment, the field operator may also send the information on actions to be taken at the equipment to the server 102. The server such as 102 determines current location of the field engineer based on the QR code and determines the equipment loop start and end point. The server 102 then compares the current situation of the plant environment 100 with actions taken/to be taken by the field operator. The comparison results are communicated to the handheld device 124 from the server 102 and are displayed on the handheld device 124. The comparison results include the corrective actions. The field operator can then execute the corrective actions accordingly or navigate to suggested alternative corrective action. Alternatively, the field operator can use the 'switch to DCS' button to view the current situation, plant displays, trend, alarms and so on.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of reference signs

100- plant environment
102-server
104-network
106-controller
108- an input/output (I/O) module
110-terminal box
112- field device
114-HMI
116-signal wires
118-maintenance management module
120-maintenance database
122-communication interface
124-handheld device(s)
126-automation system
128-connection paths
202-processor 202,
204- memory
206- a storage unit
208-a bus,
210- distributed control system database

## Claims

1. A method for assisting operator to rectify faults in a plant environment (100), the method comprising:
providing, by a processor(202), an engineering data table of an automation system (126), wherein the engineering data table is generated using a wiring diagram associated with the automation system (126), an interlock table associated with the automation system (126) and an equipment characteristics table associated with the automation system (126) ;
predicting, by the processor (202), an abnormal condition associated with an equipment (106, 112) in the automation system (126) based on the engineering data table and a real-time plant engineering data;
determining, by the processor (202), a corrective action for the predicted abnormal condition associated with the equipment (106,112) in the automation system (126), wherein the corrective action rectifies the predicted abnormal condition associated with the equipment (106, 112); and
outputting, by the processor (202), the determined corrective action and the predicted abnormal condition associated with the equipment (106, 112) on a user interface.

2. The method according to claim 1, wherein the engineering data table comprises physical wiring interconnections between the equipments (106, 112) in the automation system (126), connection paths (128) connecting equipments (106, 112) via junction points, the interlock table associated with the automation system (126), unique addresses associated with the connection paths, unique identifiers associated with the equipments (106, 112) and the junction points, and the equipment characteristic table associated with each equipment (106, 112) in the automation system (126) .

3. The method according to claim 1, wherein predicting the abnormal condition associated with the equipment (106, 112) in the automation system (126) based on the engineering data table and the real-time plant engineering data comprises:
predicting the abnormal condition associated with the equipment (106, 112) in the automation system (126) based on an amount of time required by the equipment characteristic of the equipment (106, 112) to reach a maximum threshold point associated with the equipment(106,112).

4. The method according to claim 3, wherein predicting the abnormal condition associated with the equipment (106, 112) in the automation system (126) based on the amount of time required by the equipment characteristic of the equipment (106, 112) to reach the maximum threshold point associated with the equipment(106,112)comprises:
receiving the real-time plant engineering data from the plant environment (100), wherein the real-time plant engineering data comprises interlock information of the plant environment (100) and a current equipment characteristic of each equipment (106,112) in the automation system (126) ;
identifying a maximum threshold point associated with each characteristic of the equipment (106, 112) in the automation system (126) from the engineering data table;
comparing the maximum threshold point associated with each characteristic of the equipment (106, 112) in the automation system (126) with the current equipment characteristic in the received real-time plant engineering data;
computing an amount of time required by the equipment characteristic to reach the maximum threshold point based on the comparison; and
predicting the abnormal condition associated with the equipment (106, 112) in the automation system (126) based on the computed amount of time required by the equipment characteristic to reach the maximum threshold point.

5. The method according to claim 1, wherein determining the corrective action for the predicted abnormal condition associated with the equipment (106, 112) in the automation system (126) comprises:
determining the corrective action for the predicted condition associated with the equipment (106, 112) in the automation system (126) based on a historical data stored in a database (120).

6. The method according to claim 1, wherein determining the corrective action for the predicted abnormal condition associated with the equipment (106, 112) in the automation system (126) comprises:
temporarily creating a simulation environment corresponding to the real-time plant engineering data associated with the plant environment (100);
simulating predicted abnormal condition associated with the equipment (106, 112) in the simulated environment to identify the corrective action; and
outputting the corrective action for the predicted abnormal condition associated with the equipment (106, 112), wherein a positive simulation result is yielded by the corrective action.

7. The method according to claim 6, further comprising:
determining a first alternate corrective action for the predicted abnormal condition associated with the equipment (106, 112) if the simulation result is negative, wherein the first alternate corrective action is determined based on engineering data rules.

8. The method according to claim 6 or 7, further comprising:
determining a second alternate corrective action for the predicted abnormal condition associated with the equipment (106, 112) based on dependency of each closed loop in the plant environment (100), wherein the dependency of each closed loop in the plant environment (100) is obtained from the engineering data table.

9. The method according to claim 1, wherein the wiring diagram comprises start and end points of a closed loop and interconnectivity between each equipments (106, 112) in the automation system (126) and wherein the interlock table associated with the automation system (126) comprises process interlock information and safety interlock information and wherein the equipment characteristic table comprises equipment type information, equipment limit information, operating conditions, material used, vendor details, and equipment serial number.

10. The method according to claim 1, wherein the abnormal condition comprises one or more alarms, warning condition of the equipment (106, 112), danger condition of the equipment (106, 112), and one or more fault conditions of the equipment (106, 112).

11. The method according to claim 1, further comprising:
determining a faulty equipment in the automation system (126) based on the predicted abnormal condition and the engineering data table;
- determining a location of the faulty equipment in the automation system (126), wherein the location of the faulty equipment is indicative of a physical location of the faulty equipment in the plant environment (100); and
- outputting the location of the faulty equipment on the user interface.

12. The method according to claim 1, further comprising:
automatically executing the determined corrective actions in the automation system (126) after a predefined time interval.

13. An apparatus (102)comprising:
a processor (202); and
a memory (204) coupled to the processor (202), wherein the memory (204) comprises a maintenance management module (118) stored in the form of machine-readable instructions and executable by the processor (202), wherein the maintenance management module (118) is configured for:
providing an engineering data table of an automation system (126), wherein the engineering data table is generated using a wiring diagram associated with the automation system (126), an interlock table associated with the automation system (126) and an equipment characteristics table associated with the automation system (126) ;
predicting an abnormal condition associated with an equipment (106, 112) in the automation system (126) based on the engineering data table and a real-time plant engineering data;
determining a corrective action for the predicted abnormal condition associated with the equipment (106,112) in the automation system (126), wherein the corrective action rectifies the predicted abnormal condition associated with the equipment (106, 112); and
outputting the determined corrective action and the predicted abnormal condition associated with the equipment (106, 112) on a user interface.

14. The apparatus (102) according to claim 13, wherein in predicting the abnormal condition associated with the equipment (106, 112) in the automation system (126) based on the engineering data table and the real-time plant engineering data, the maintenance management module (118) is configured for:
predicting the abnormal condition associated with the equipment (106, 112) in the automation system (126) based on an amount of time required by the equipment characteristic of the equipment (106, 112) to reach a maximum threshold point associated with the equipment(106,112).

15. The apparatus (102) according to claim 14, wherein in predicting the abnormal condition associated with the equipment (106, 112) in the automation system (126) based on the amount of time required by the equipment characteristic of the equipment (106, 112) to reach the maximum threshold point associated with the equipment(106,112), the maintenance management module (118) is configured for:
receiving the real-time plant engineering data from the plant environment (100), wherein the real-time plant engineering data comprises interlock information of the plant environment (100) and a current equipment characteristic of each equipment (106,112) in the automation system (126) ;
identifying a maximum threshold point associated with each characteristic of the equipment (106, 112) in the automation system (126) from the engineering data table;
comparing the maximum threshold point associated with each characteristic of the equipment (106, 112) in the automation system (126) with the current equipment characteristic in the received real-time plant engineering data;
computing an amount of time required by the equipment characteristic to reach the maximum threshold point based on the comparison; and
predicting the abnormal condition associated with the equipment (106, 112) in the automation system (126) based on the computed amount of time required by the equipment characteristic to reach the maximum threshold point.

16. The apparatus (102) according to claim 13, wherein in determining the corrective action for the predicted abnormal condition associated with the equipment (106, 112) in the automation system (126), the maintenance management module (118) is configured for:
determining the corrective action for the predicted condition associated with the equipment (106, 112) in the automation system (126) based on a historical data stored in a database (120) .

17. The apparatus (102) according to claim 13, wherein in determining the corrective action for the predicted abnormal condition associated with the equipment (106, 112) in the automation system (126), the maintenance management module (118) is configured for:
temporarily creating a simulation environment corresponding to the real-time plant engineering data associated with the plant environment (100);
simulating predicted abnormal condition associated with the equipment (106, 112) in the simulated environment to identify the corrective action; and
outputting the corrective action for the predicted abnormal condition associated with the equipment (106, 112), wherein a positive simulation result is yielded by the corrective action.

18. The apparatus (102) according to claim 17, wherein the maintenance management module (118) is configured for:
determining a first alternate corrective action for the predicted abnormal condition associated with the equipment (106, 112) if the simulation result is negative, wherein the first alternate corrective action is determined based on engineering data rules.

19. The apparatus (102) according to claim 17 or 18, wherein the maintenance management module (118) is configured for:
determining a second alternate corrective action for the predicted abnormal condition associated with the equipment (106, 112) based on dependency of each closed loop in the plant environment (100), wherein the dependency of each closed loop in the plant environment (100) is obtained from the engineering data table.

20. The apparatus (102) according to claim 13, wherein the maintenance management module (118) is configured for:
determining a faulty equipment in the automation system (126) based on the predicted abnormal condition and the engineering data table;
- determining a location of the faulty equipment in the automation system (126), wherein the location of the faulty equipment is indicative of a physical location of the faulty equipment in the plant environment (100); and
- outputting the location of the faulty equipment on the user interface.

21. The apparatus (102) according to claim 13, wherein the maintenance management module (118) is configured for:
automatically executing the determined corrective actions in the automation system (126) after a predefined time interval.

22. A maintenance management system comprising:
a server (102) configured for performing method steps according to claims 1 to 12; and
one or more handheld devices (124) adapted for assisting field engineer in maintenance and repair activities in a plant environment (100), wherein the one or more handheld devices (124) are communicatively coupled to the server (102) via a network (104).
